# EUROPEAN PATENT APPLICATION

(11) **EP 4 769 134 A1**
(43) Date of publication of application: **01.07.2026**
(21) Application number: 24918286.6
(22) Date of filing: 13.12.2024
(51) Int. Cl.: G06F 9/451

(54) **INTERFACE DISPLAY METHOD AND APPARATUS, DEVICE AND STORAGE MEDIUM**

(30) Priority: 19.01.2024 CN 202410079799
(71) Applicant: Tencent Technology (Shenzhen) Company Limited, Shenzhen, Guangdong 518057 (CN)
(72) Inventor: WANG, Ziyi, Shenzhen, Guangdong 518057 (CN)
(74) Representative: EP&C
(86) International application number: PCT/CN2024/139380
(87) International publication number: WO 2025/152678

(57) **Abstract**

The present application relates to the technical fields of computers and the Internet. Disclosed are an interface display method and apparatus, a device and a storage medium. The method comprises: displaying a first user interface provided by a first system in an application (610), the application comprising a plurality of systems, and each system providing at least one user interface; in response to an operation of closing the first user interface, displaying first information area and second information area (620); and in response to an operation of selecting a specified sub-area, displaying a second user interface, wherein when the specified sub-area is a sub-area in the first information area, the second user interface is a historical user interface represented by the specified sub-area, and when the specified sub-area is a sub-area in the second information area, the second user interface is a historical user interface or a home page of a system represented by the specified sub-area. The present method improves human-computer interaction efficiency during interface display.

## Description

### RELATED APPLICATION

This disclosure claims priority to Chinese Patent Application No. 202410079799.1, entitled "INTERFACE DISPLAY METHOD AND APPARATUS, DEVICE, AND STORAGE MEDIUM" filed on January 19, 2024.

### FIELD OF THE TECHNOLOGY

Embodiments of this disclosure relate to the field of computer and Internet technologies, and in particular, to an interface displaying method and apparatus, a device, and a storage medium.

### BACKGROUND OF THE DISCLOSURE

An application usually has multiple function partitions. Each function partition may be considered as a system or a module within the application. Accordingly, each system may have an interface at a display level.

In related technologies, when a user wants to view a certain interface under a certain system in an application, the user needs to first open a main interface of the system, and then open lower (or subordinate) interfaces step by step according to the display level from the main interface until the user enters the interface that the user wants to view.

Thus, the interface display requires many steps/operations, resulting in low human-computer interaction efficiency during the interface display process.

### SUMMARY

Embodiments of this disclosure provide an interface displaying method and apparatus, a device, and a storage medium, which can improve human-computer interaction efficiency in an interface display process. The technical solutions provided in the embodiments of this disclosure are as follows:
According to an aspect of the embodiments of this disclosure, an interface displaying method is provided, executable by a terminal device and including:
displaying a first user interface provided by a first module in an application, the application comprising a plurality of modules, and each module providing at least one user interface;
displaying, in response to detecting an operation of closing the first user interface, a first information region and a second information region in the first user interface, the first information region comprising a plurality of first sub-regions each representing a precedent user interface displayed by a module in the plurality of modules other than the first module before the operation of closing, and the second information region comprising a plurality of second sub-regions respectively representing the plurality of modules;
displaying, in response to selecting a first sub-region in the first information region, a precedent user interface represented by the first sub-region; and
displaying, in response to selecting a second sub-region in the second information region, a precedent user interface or a home page of a module represented by the second sub-region.

According to an aspect of the embodiments of this disclosure, an interface displaying apparatus is provided, including:
an interface display module, configured to display a first user interface provided by a first module in an application, the application comprising a plurality of modules, and each module providing at least one user interface; and
an information display module, configured to display, in response to detecting an operation of closing the first user interface, a first information region and a second information region in the first user interface, the first information region comprising a plurality of first sub-regions each representing a precedent user interface displayed by a module in the plurality of modules other than the first module before the operation of closing, and the second information region comprising a plurality of second sub-regions respectively representing the plurality of modules;
the interface display module being further configured to display, in response to selecting a first sub-region in the first information region, a precedent user interface represented by the first sub-region; and
the interface display module being further configured to display, in response to selecting a second sub-region in the second information region, a precedent user interface or a home page of a module represented by the second sub-region.

According to an aspect of the embodiments of this disclosure, a terminal device is provided, including a processor and a memory, the memory having a computer program stored therein, and the computer program being loaded and executed by the processor to implement the foregoing method.

According to an aspect of the embodiments of this disclosure, a computer-readable storage medium is provided, having a computer program stored therein, the computer program being loaded and executed by a processor to implement the foregoing method.

According to an aspect of the embodiments of this disclosure, a computer program product is provided, including a computer program, the computer program being stored in a computer-readable storage medium. A processor of a terminal device reads the computer program from the computer-readable storage medium, and executes the computer program, to cause the terminal device to perform the foregoing method.

### BRIEF DESCRIPTION OF THE DRAWINGS

FIG. 1 is a schematic diagram of an implementation environment provided by an embodiment of this disclosure.
FIG. 2 is a schematic diagram of an architecture of a legion module in an application.
FIG. 3 is a schematic diagram of comparison between a precedent user interface recording method and the related art according to an embodiment of this disclosure.
FIG. 4 is a schematic diagram of an interface displaying method provided by an embodiment of this disclosure.
FIG. 5 is a schematic diagram of an interface displaying method provided by the related art.
FIG. 6 is a flowchart of an interface displaying method provided by an embodiment of this disclosure.
FIG. 7 is a schematic diagram of a first information region and a second information region provided by an embodiment of this disclosure.
FIG. 8 is a flowchart of an interface displaying method provided by another embodiment of this disclosure.
FIG. 9 is a schematic diagram of an operation of selecting a first sub-region provided by an embodiment of this disclosure.
FIG. 10 is a schematic diagram of an operation of selecting a first sub-region provided by another embodiment of this disclosure.
FIG. 11 is a schematic diagram of displaying a second user interface in a picture-in-picture mode provided by an embodiment of this disclosure.
FIG. 12 is a schematic diagram of a size adjustment control and a cancel control provided by an embodiment of this disclosure.
FIG. 13 is a schematic diagram of a size adjustment control and a cancel control provided by another embodiment of this disclosure.
FIG. 14 is a schematic diagram of a first information region provided by another embodiment of this disclosure.
FIG. 15 is a schematic diagram of a first information region and a second information region provided by another embodiment of this disclosure.
FIG. 16 is a flowchart of an interface displaying method provided by another embodiment of this disclosure.
FIG. 17 is a block diagram of a precedent user interface recording method provided by an embodiment of this disclosure.
FIG. 18 is a block diagram of an interface displaying method provided by an embodiment of this disclosure.
FIG. 19 is a block diagram of an interface displaying method provided by another embodiment of this disclosure.
FIG. 20 is a block diagram of an interface displaying apparatus provided by an embodiment of this disclosure.
FIG. 21 is a block diagram of an interface displaying apparatus provided by another embodiment of this disclosure.
FIG. 22 is a structural block diagram of a terminal device provided by an embodiment of this disclosure.

### DESCRIPTION OF EMBODIMENTS

To make the objectives, technical solutions, and advantages of this disclosure clearer, the following further describes implementations of this disclosure in detail with reference to the accompanying drawings.

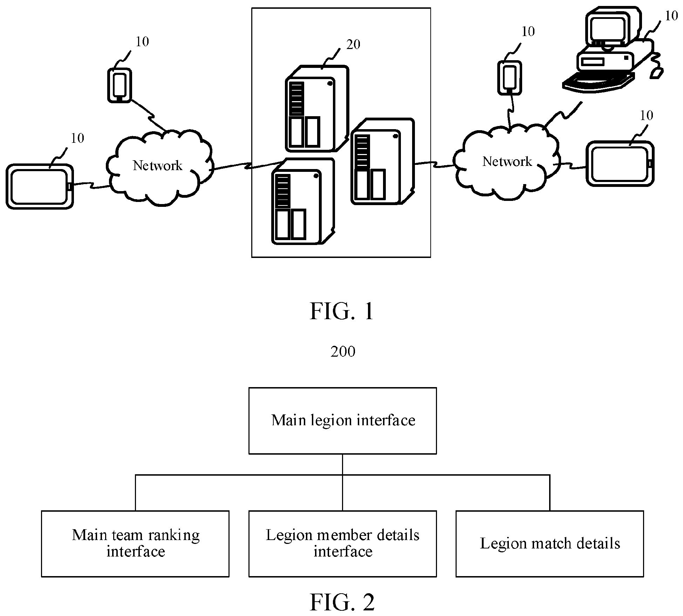

FIG. 1 is a schematic diagram of an implementation environment according to an embodiment of this disclosure. The implementation environment may be implemented as an interface displaying system. The implementation environment may include: a terminal device 10 and a server 20.

The terminal device 10 may be an electronic device such as a mobile phone, a tablet computer, a game console, an e-book reader, a multimedia playback device, a wearable device, a personal computer (PC), and an in-vehicle terminal. A client of a target application (such as a game application) may be installed in the terminal device 10. In some embodiments, the target application may be an application that needs to be downloaded and installed, or may be a click/tap-to-use application. This is not limited in this embodiment of this disclosure.

In this embodiment of this disclosure, the target application is an application providing a plurality of user interfaces. For example, the target application may be any one of a simulation application, an escape shooting game, a virtual reality (VR) application, an augmented reality (AR) program, a three-dimensional map program, a VR game, an AR game, a first-person shooting (FPS) game, a multilayer gunfight survival game, a third-person shooting (TPS) game, a multilayer online battle arena (MOBA) game, a simulation game (SLG), a social application, or an interactive entertainment application. In addition, different applications provide different systems or modules and also provide different user interfaces. Content of a first information region and content of a second information region are different. This is not limited in this embodiment of this disclosure. In this embodiment, an example in which the target application is a game application is used for description. In some embodiments, the client of the above target application may be run on the terminal device 10.

The server 20 is configured to provide a backend service for the client of the target application in the terminal device 10. For example, the server 20 may be, but is not limited to, an independent physical server, or a server cluster or distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

The terminal device 10 may communicate with the server 20 through a network.

The application may include a plurality of modules. These modules are functional modules to provide at least one specific function in the application. The module may be regarded as a system in all embodiments of the present disclosure. Each module includes one or more user interfaces corresponding to one function in the application, and a control logic of the one or more user interfaces. FIG. 2 is a schematic diagram of an architecture of a legion module in an application. As shown in 200 of FIG. 2, in addition to a main legion interface, the legion module in the game application further includes a main team ranking interface, a legion member details interface, and legion battle match details on the main legion interface. A module carries more functions and covers more information, and it indicates that a display level corresponding to a user interface of the module is larger. In some embodiments, a display level of the main legion interface is 1, and display levels respectively corresponding to the main team ranking interface, the legion member details interface, and the legion match details are 2. In some embodiments, a larger display level indicates a larger module depth.

Generally, all applications may have many modules at the same level. The example in which the application is the game application is still used. For example, a "task module" and a "warehouse module" bear different functions and roles. In a game, there are also two separate entries at the same level in the game, and generally there is no function and information coupling. These modules may be considered as parallel systems. There are many parallel systems inside the application, for example, more than ten parallel systems. A user usually needs to frequently jump to these modules, and a depth of a single module is also large. In the same module, there may be usually three layers of jump, for example, the user usually needs to perform at least three or more operations to complete a task in the module.

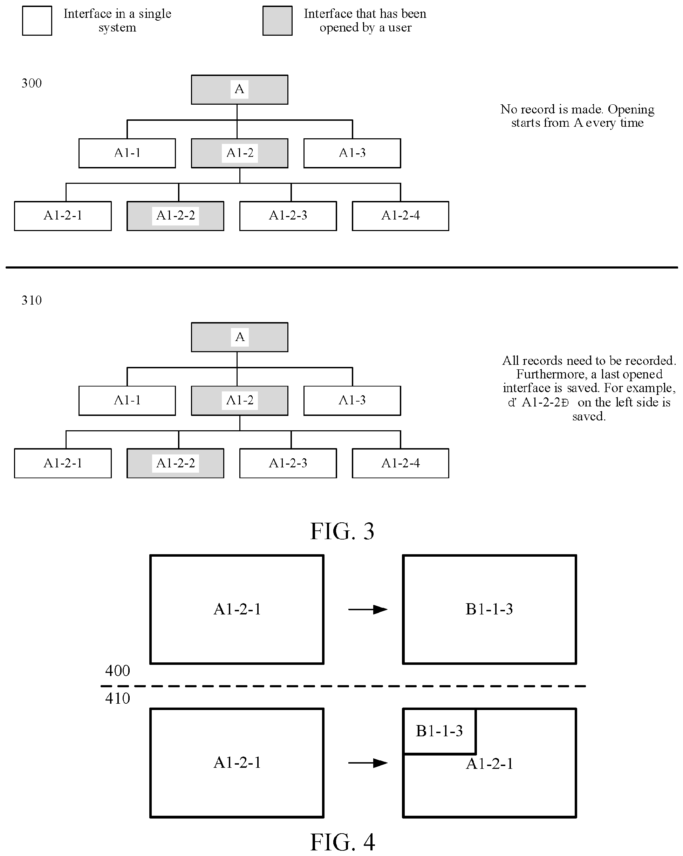

In addition, many pieces of module information in the game need to be compared. For example, "costumes in a mall" is compared with "my costumes". There are many parallel modules in the game, and the modules bear different functions. However, to apply different functions, the user needs to make a jump in different modules. For each jump, the user needs to close a current interface, then go to a main interface to find an entry of a corresponding function, and click/tap the entry to enter. It is more complex if switching or jumping is performed at different depths in a single module. Consequently, the user spends a lot of time in core gameplay, interaction efficiency between the user and the interfaces is low, and the experience is poor. At each time the user opens a new interface, the user needs to click/tap a top-level interface level by level. At each time the user intends to enter module B from module A, the user needs to close module A, find module B, and then click/tap a button of module B. This is very complex and has low efficiency. When the user needs to compare two modules, for example, when the user views information of another person and finds that a costume of the person is attractive, the user intends to go to search a mall for the costume, but it is easy for the user to forget a specific costume style after the user closes the interface of "information of another person" and enters the mall for searching. As a result, a search mistake is likely to occur, leading to mistakes. As shown in 300 of FIG. 3, at each time a module is opened, it starts from home page A.

In the technical solution provided by this embodiment of this disclosure, at each time the user switches between different modules, precedent user interfaces of the modules may be recorded. When the user closes a user interface, by touching and holding, the user may view all module options (presented through the second information region) in an application and a precedent user interface (presented through the first information region) that is recently opened. By sliding, the user may jump to interfaces quickly, for example, quickly opening a precedent user interface. In this embodiment of this disclosure, a precedent user interface of each module is recorded. As shown in 310 of FIG. 3, a reserved precedent user interface is "A1-2-2". When the user opens module A again, a user interface corresponding to A1-2-2 may be directly opened. As shown in 400 in FIG. 4, a currently opened user interface is A1-2-1, for example, the currently opened user interface is provided by module A. A close control is displayed on the current user interface. In response to a one-step operation on the close control, user interface B1-1-3 may be quickly switched to and displayed. User interface B1-1-3 is a user interface last displayed by module B before module B is closed, i.e. a precedent user interface of module B.

Further, this disclosure further provides a picture-in-picture function. To be specific, a precedent user interface is displayed in a picture-in-picture mode, to facilitate comparison between the precedent user interface and the current user interface, for example, facilitate horizontal comparison between different modules by the user. As shown in 410 in FIG. 4, a currently opened user interface is A1-2-1, for example, the currently opened user interface is provided by module A. A close control is displayed on the current user interface. In response to a one-step operation on the close control, user interface B1-1-3 may be displayed on an upper layer of user interface A1-2-1 in the picture-in-picture mode. User interface B1-1-3 is a user interface last displayed by module B before module B is closed, i.e. a precedent user interface of module B. In this case, the user may quickly compare user interface A1-2-1 with precedent user interface B1-1-3.

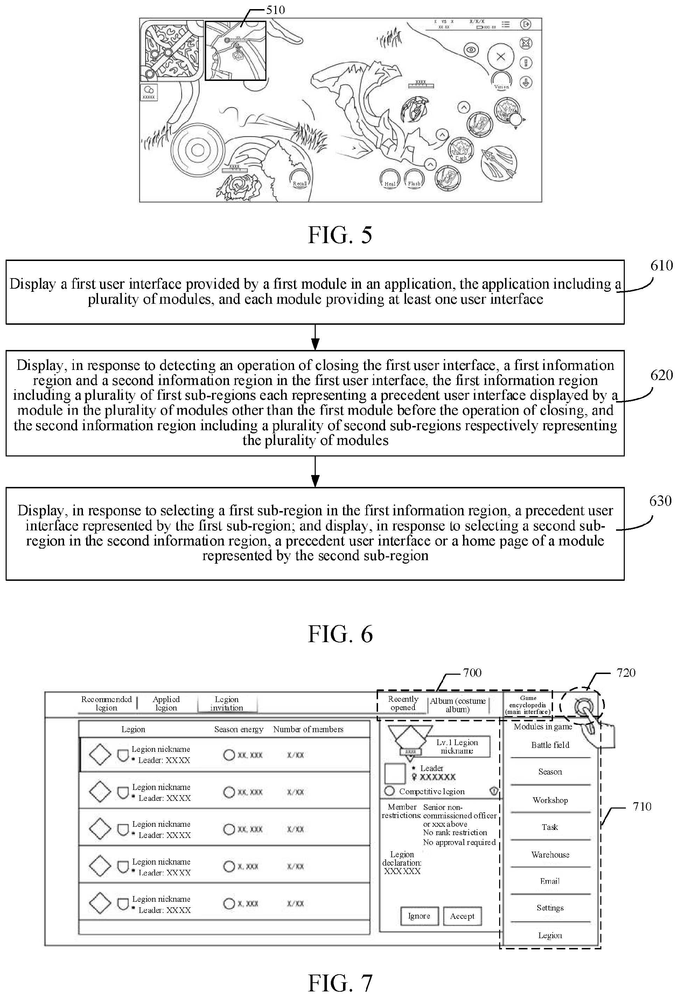

A schematic diagram of a picture-in-picture interface is provided for the picture-in-picture function. As shown in FIG. 5, when a game battle is triggered after a condition is satisfied, a picture 510 at a corresponding position is displayed at a fixed position on a screen in a picture-in-picture mode, for example, pictures within fields of view of two cameras may be displayed in the terminal device.

The picture-in-picture function provided in FIG. 5 is applied only inside the game battle, and the picture-in-picture is closely related to the game battle. However, the technical solution provided in this embodiment of this disclosure is different from the picture-in-picture function shown in FIG. 5. Different modules may be compared by comparing pictures inside and outside the picture-in-picture, thereby enriching application scenes of comparison and improving comparison efficiency.

FIG. 6 is a flowchart of an interface displaying method provided by an embodiment of this disclosure. An executing entity of operations of the method may be the terminal device 10 in the implementation environment shown in FIG. 1. For example, the executing entity of the operations may be the client of the target application. In the following method embodiments, for ease of description, an example in which the executing entity of the operations is the "client" is used for description only. The method may include at least one of the following operations (610 to 630):

Operation 610: Display a first user interface provided by a first module in an application, the application including a plurality of modules, and each module providing at least one user interface.

A type of the application is not limited in this embodiment of this disclosure. The application may be the above target application. The application includes, but is not limited to, a game application, a social application, a search application, and a shopping application. In some embodiments, each application includes a plurality of modules. These modules may be the parallel modules shown in the above embodiment. In some embodiments, the application is a game application, and the modules in the game application include, but are not limited to, at least one of a warehouse, a ranking list, and costumes. In some embodiments, the application is a social application, and the modules in the social application include, but are not limited to, contacts, settings, and a personal home page. In some embodiments, the application is a search application, and the modules in the search application include, but are not limited to, a search home page, a shopping cart, and my shopping.

In some embodiments, each module provides at least one user interface. When the module provides only one user interface, the user interface is a home page of the module. When the module provides a plurality of user interfaces, the plurality of user interfaces provided by the modules are classified into different display levels based on a module depth. The module depth is determined by a number of operations that need to be performed by a user from a home page switched to a current user interface. The plurality of user interfaces provided by the module may be at the same display level, or may be at different display levels. User interfaces at different display levels correspondingly display a quantity of user operations required by the user interfaces. In some embodiments, a larger (or higher) display level of a user interface indicates a larger module depth and corresponds to more operations that need to be performed by a user. A smaller (or lower) display level of a user interface indicates a smaller module depth and corresponds to less operations that need to be performed by a user.

In some embodiments, when an application is opened, a home page or a previously opened interface of the application is displayed by default. In some embodiments, module controls respectively corresponding to the modules are displayed on the home page of the application. A home page provided by a target module is displayed in response to a touch operation on a target module control among the plurality of module controls. In some embodiments, a plurality of sub-modules are provided in the target module. Sub-module controls respectively corresponding to the sub-modules are displayed on the home page provided by the target module. A home page provided by a target sub-module is displayed in response to a touch operation on a target sub-module control among the plurality of sub-module controls. The rest can be done in the same manner. This disclosure does not limit a module depth or a display level included in each module. In some embodiments, a setting module in the social application provides personal settings, payment settings, skin settings, privacy settings, and the like. The personal settings are used as an example. The personal settings further include signature settings and background settings. It is considered that the personal settings, the payment settings, the skin settings, and the privacy settings have the same display level, and the signature settings and the background settings have the same display level. In addition, a module depth of the signature settings or the background settings is greater than a module depth of the personal settings, the payment settings, the skin settings, or the privacy settings.

In some embodiments, the first user interface is an interface currently opened by a user. The first user interface may be a home page of the application, or may be a user interface provided by the first module. A module depth of the first user interface in the module is not limited. For example, the first user interface is a home page of the first module, or a user interface provided by a sub-module in the first module.

Operation 620: Display, in response to detecting an operation of closing the first user interface, a first information region and a second information region in the first user interface, the first information region including a plurality of first sub-regions each representing a precedent user interface displayed by a module in the plurality of modules other than the first module before the operation of closing, and the second information region including a plurality of second sub-regions respectively representing the plurality of modules.

The precedent user interface (may also called as a historical user interface ) of the module may be a user interface before the system exits displaying last time or time after time, i.e., before its most recent or multiple previous exits from display. And each sub-region in the second information region is configured for representing a system.

In some embodiments, a user interface (UI) control is any visible control or element that can be seen on a user interface of the application, such as a picture, an input box, a text box, a button, and a label. Some UI controls, e.g. a close control, close user interfaces in response to an operation of a user. The user triggers the close control to close the user interface. The UI controls involved in this embodiment of this disclosure include, but are not limited to: a close control, a size adjustment control, and a cancel control.

Based on the solution shown in any one or more of the embodiments of this disclosure, in some embodiments, the operation of closing the first user interface may be an operation on the close control displayed on the first user interface, and the close control is a control for closing the first user interface. An operation type of the operation is not limited in this disclosure. For example, the operation is a click/tap operation, a touch and hold operation, a double click/tap operation, or the like. In some embodiments, the operation of closing the first user interface may be an operation on a first region on the first user interface. The first region is a region for closing the first user interface. An operation type of the operation is not limited in this disclosure. For example, the operation is a click/tap operation, a touch and hold operation, a double click/tap operation, or the like. Exemplarily, a position that does not block a main display element on the user interface is determined as the first region. In some embodiments, as shown in FIG. 7, a close control 720 is displayed on a first user interface. A first information region 700 and a second information region 710 are displayed in response to detecting an operation of closing the first user interface. For example, the first information region 700 includes a plurality of sub-regions. The sub-regions represent an album (a costume album) or a game encyclopedia (a main interface), and the album (the costume album) or the game encyclopedia (the main interface) are respectively precedent user interfaces. For example, the second information region 710 includes a plurality of sub-regions. Different sub-regions respectively represent a battle field, Season, a workshop, a task, and the like. The battle field, the Season, the workshop, and the task respectively correspond to modules.

In some embodiments, when the client identifies an intention of a user to close the first user interface, the client displays the first information region and the second information region. The first information region may alternatively be referred to as "recently opened region " or "precedent record region ". In some embodiments, the first information region is configured for recording precedent user interfaces, and each sub-region in the first information region corresponds to the precedent user interface of one module. In some embodiments, the second information region is configured for recording modules, and each sub-region in the second information region corresponds to one module. To be specific, at least two options are provided to a user. One option is the first information region, to help the user open the precedent user interfaces. The other option is to directly provide all the modules to the user for selection. In addition, in this embodiment of this disclosure, the displaying of the first information region and the second information region is triggered through the close control, and the operation of closing the first user interface by the user is associated with triggering of interface presentations of the first information region and the second information region. The two functions, i.e. the closing of the first user interface and the displaying of the first information region and the second information region, may be implemented through a close operation, thereby improving operation efficiency of the user.

Based on the solution shown in any one or more of the embodiments of this disclosure, in some embodiments, when the first information region includes the plurality of sub-regions, an arrangement order of the plurality of sub-regions in the first information region is determined based on close moments (i.e., closing time instants) of the precedent user interfaces respectively represented by the plurality of sub-regions in the first information region; or, the arrangement order of the plurality of sub-regions in the first information region is related to a closing order of the precedent user interfaces respectively represented by the plurality of sub-regions in the first information region. In some embodiments, if the close moment of a precedent user interface is more recent, a priority is higher. A sub-region corresponding to a precedent user interface with a higher priority has a top display position in the first information region. Such a sorting manner in the first information region is more in line with the intention of the user. For example, after opening user interface A1-2-3, the user then opens user interface B2-1. In this case, a sub-region corresponding to user interface A1-2-3 is ranked at the topmost position in the first information region. In this disclosure, the sub-regions in the first information region are sorted based on the close moments, so that a sub-region that corresponds to a user interface that is recently closed in the first information region may be preferentially presented to the user, so that a sub-region that corresponds to a user interface that is most likely to be selected by the user is preferentially displayed in a position convenient for selection by the user. This is conductive to enhancing a user experience and facilitating the user to make a quick jump.

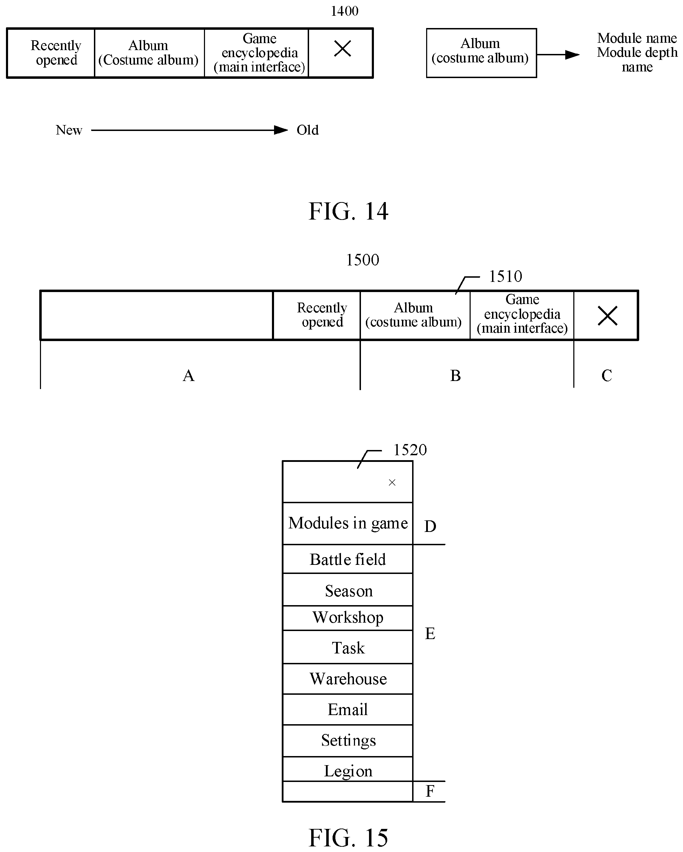

Based on the solution shown in any one or more of the embodiments of this disclosure, in some embodiments, each sub-region in the first information region displays at least one of the following: a name of the module represented by the respective sub-region; a name of the precedent user interface of the module represented by the respective sub-region; and a thumbnail of the precedent user interface of the module represented by the respective sub-region. In some embodiments, FIG. 2 is used as an example. When a precedent user interface in the legion module is a legion member details interface, the sub-region displays at least one of a name of the legion module, a name of the legion member details interface, and a thumbnail of the legion member details interface. For example, the sub-region displays "legion (legion member details)". The thumbnail of the legion member details interface may be considered as the legion member details interface last displayed by the legion module. A screenshot is taken on the interface to obtain the thumbnail of the legion member details interface. In some embodiments, as shown in 1400 of FIG. 14, the first information region includes a plurality of sub-regions that are arranged in a chronological order, and each sub-region displays a module name and a module depth name (i.e., the name of the precedent user interface of the module). In this embodiment of this disclosure, at least three display manners are provided for the sub-regions in the first information region. This enriches interface displaying forms, so that a user can more easily distinguish the user interface corresponding to each sub-region, thereby improving interaction efficiency when the user switches the interfaces. Meanwhile, the precedent user interfaces represented by the sub-regions are clearer, and the user can directly view thumbnails or read text in the sub-regions.

In some embodiments, the close moments of the precedent user interfaces represented by the sub-regions included in the first information region are set. Exemplarily, a user interface that is previously opened within a time period of first duration before a current moment is recorded, and is displayed in the first information region. For example, on a daily basis, a precedent user interface that is displayed at each time in the first information region is only a user interface that is last opened on different modules on the day. For example, based on every login, content in the first information region is cleared when the user logs out. When the user starts to log in, precedent user interfaces of different user interfaces are counted, and the first information region is updated. In the technical solution provided in this embodiment of this disclosure, by continuously clearing the precedent user interfaces, storage costs of a server can be reduced, and display costs of the terminal device can be reduced. In addition, it is also more in line with the intention of the user for switching and comparison to an extent. The user generally has no demand for switching an interface opened today to an interface opened yesterday or for comparing the interface opened today with the interface opened yesterday, because the user may be likely not to remember the interface opened yesterday and will not perform comparison or switching.

Based on the solution shown in any one or more of the embodiments of this disclosure, in some embodiments, when the second information region includes the plurality of sub-regions, an arrangement order of the plurality of sub-regions in the second information region is determined based on attribute information of the modules respectively represented by the plurality of sub-regions in the second information region; or, the arrangement order of the plurality of sub-regions in the second information region is related to the attribute information of the modules respectively represented by the plurality of sub-regions in the second information region. The attribute information includes at least one of the following: a precedent open frequency, i.e., a frequency of previously opening a module, popularity information of a module, and weight information of a module.

In some embodiments, the precedent open frequency may be considered as a frequency of previously opening each module by a first user account logged in on a client of a current application. For example, a quantity of modules opened by the first user account within second duration is counted, and an open frequency of each module is calculated, thus obtaining a precedent open frequency of each module. Exemplarily, the sub-regions in the second information region are displayed in sequence in descending order of the precedent open frequencies.

In some embodiments, the popularity information may be considered as a popularity of the module. The popularity of the module may be counted by the server. The server counts a number of times that different user accounts are used to open each module, a number of times that each module is mentioned in another application, and the like, to calculate the popularity information of different modules. Exemplarily, the sub-regions in the second information region are displayed in sequence in descending order of popularity values in the popularity information.

In some embodiments, the weight information may be considered as a weight value endowed or configured to the module. The weight value may be customized by a user, or may be set by a developer in advance. Exemplarily, a setting control or interface for the weight value of each module is provided for a user inside the application. The user may set the weight value of each module, so as to change an arrangement position of each sub-region in the second information region. Exemplarily, the sub-regions in the second information region are displayed in sequence in descending order of the weight values in the weight information.

In some other embodiments, in addition to setting the weight value of each module, the user may further set a quantity of sub-regions in the second information region. In this way, personalized customization on the second information region may be implemented to meet requirements of different users.

In some other embodiments, weighted summation is performed on the precedent open frequency, the popularity information, and the weight information to obtain a score of each module. Exemplarily, the sub-regions in the second information region are displayed in sequence in descending order of the scores.

This embodiment of this disclosure has various forms in the arrangement order of the sub-regions in the second information region. For example, a customization requirement of a user can be met in a customization manner. Based on the precedent open frequency or the popularity information, the second information regions are determined in terms of a habit of the user or a statistical situation. To be specific, positions of the sub-regions in the second information region are also updated in real time. It is easy to determine a behavior habit of the user, thus reducing operations and lowering resource overheads.

Based on the solution shown in any one or more of the embodiments of this disclosure, in some embodiments, each sub-region in the second information region displays at least one of the following: a name of the module represented by the respective sub-region; and referral data of the module represented by the respective sub-region, the referral data (one kind of recommendation information) indicating that at least one second user account having a social relationship with a first user account recommends the module, and the first user account being a user account that is currently logged in on the application.

In some embodiments, each sub-region in the second information region displays the name of the module represented by the sub-region. For example, the sub-regions in the second information region display a warehouse, costumes, a shopping mall, and the like.

In some embodiments, each sub-region in the second information region displays the referral data of the module represented by the sub-region. This disclosure does not limit a representation form of the referral data. For example, the referral data is a star, spark, or a circle. In some embodiments, the terminal device 10 includes a first terminal device and a second terminal device. The first terminal device is installed with a first client of the target application. The second terminal device is installed with a second client of the target application. A first user uses a first user account to log in to the first client of the target application, and a second user uses a second user account to log in to the second client of the target application. Exemplarily, when the second user account recommends module "a", referral data corresponding to module "a" in the second information region is affected. For example, when the referral data is a star, if there are a larger quantity of second user accounts recommending module "a", there are a larger quantity of stars in the referral data corresponding to module "a". When the first user views the second information region, a recommendation degree of the second user accounts for the module can be determined based on the quantity of stars. Exemplarily, the second user account and the first user account have a friend relationship, a follower and followee relationship, or the like. If the first user finds, when viewing the second information region, that the referral data corresponding to module "a" includes five stars, it is determined that there are five second user accounts recommending the module. Therefore, the user may switch to the module quickly. If module x has been newly installed to the game application, the second user account is quite satisfied with this module after opening the module, and then marks the module. This means recommendation. The first user account may not follow module x before, but can quickly switch to a home page or a precedent user interface of module x based on the referral data of module x.

In this embodiment of this disclosure, displaying the name of the module in the sub-region of the second information region is conductive to helping a user quickly perceive a module. To be specific, the user can quickly determine, based on the name of the module displayed in the sub-region of the second information region, which module each sub-region corresponds to, thus helping improve human-computer interaction efficiency during interface switching. In addition, by displaying the referral data of the module in the sub-region of the second information region, the user can have a deeper understanding of a recommendation situation of another user account for the module, thereby providing more references for the user to selectively open the precedent user interface or the home page of the module. This is conductive to enhancing human-computer interaction and implementing quick jump.

Certainly, specific representation forms of the sub-regions in the first information region and the second information region are not limited in this embodiment of this disclosure. The sub-regions may be represented as controls or regions in which the controls are.

Operation 630: Display, in response to selecting a first sub-region in the first information region, a precedent user interface represented by the first sub-region; and display, in response to selecting a second sub-region in the second information region, a precedent user interface or a home page of a module represented by the second sub-region.

Display a second user interface in response to an operation of selecting a specified sub-region, when the specified sub-region is a sub-region in the first information region, the second user interface being a precedent user interface represented by the specified sub-region, and when the specified sub-region is a sub-region in the second information region, the second user interface being a precedent user interface or a home page of a module represented by the specified sub-region.

In some embodiments, the operation of selecting the specified sub-region may be an operation on a region control corresponding to the specified sub-region, and the region control is configured for triggering the sub-region. An operation type of the operation is not limited in this disclosure. For example, the operation is a click/tap operation, a touch and hold operation, a double click/tap operation, or the like.

In some embodiments, a precedent user interface represented by a first sub-region is displayed in response to an operation of selecting the first sub-region in the first information region, and a precedent user interface or a home page of the module represented by a second sub-region is displayed in response to an operation of selecting the second sub-region in the second information region.

In some embodiments, when the specified sub-region is a sub-region (i.e. the above first sub-region) in the first information region, the precedent user interface represented by the specified sub-region is displayed in response to the operation of selecting the specified sub-region. In some embodiments, when the specified sub-region is a sub-region (i.e. the above second sub-region) in the second information region, the precedent user interface or the home page of the module represented by the specified sub-region is displayed in response to the operation of selecting the specified sub-region.

In some embodiments, when the specified sub-region is a sub-region in the second information region, if the module represented by the specified sub-region has a precedent user interface, the precedent user interface of the module is displayed; and if the module does not have a precedent user interface, the home page of the module is displayed. In some embodiments, in response to the operation of selecting the specified sub-region, regardless of whether there is a precedent user interface, the home page of the module represented by the specified sub-region is displayed. In some embodiments, whether a module has a precedent user interface is determined by a server. The server determines, based on a precedent user interface reported by the terminal device, whether each module has a precedent user interface, and feeds back a result to the terminal device if each module has a precedent user interface.

In some embodiments, the second user interface may be directly displayed in a full-screen mode or in a non-full-screen mode. When the second user interface is displayed in a full-screen mode, it may be considered that the first user interface is directly switched to the second user interface. When the second user interface is displayed in a non-full-screen mode, it may be considered that the first user interface is compared with the second user interface.

In some embodiments, when the second user interface is displayed in the non-full-screen mode, a display size of the second user interface is less than a display size of the first user interface. In some embodiments, the second user interface is displayed in a picture-in-picture mode. In some embodiments, when the second user interface is displayed in the picture-in-picture mode, a third user interface is displayed in the picture-in-picture mode in response to an operation of selecting a fourth sub-region. When the fourth sub-region is a sub-region in the first information region, the third user interface is a precedent user interface represented by the fourth sub-region. When the fourth sub-region is a sub-region in the second information region, the third user interface is a precedent user interface or a home page of a module represented by the fourth sub-region. To be specific, a plurality of user interfaces may be displayed in the picture-in-picture mode, and the plurality of user interfaces do not overlap. To be specific, user interfaces respectively provided by a plurality of modules are displayed on the same screen, thus enriching comparison forms and improving comparison efficiency.

In the technical solution provided by this embodiment of this disclosure, the first information region and the second information region are displayed in response to the operation on the first user interface, and the second user interface is displayed in response to the operation of selecting the specified sub-region from the first information region or the second information region. The second user interface is the precedent user interface or the home page of the module. In this disclosure, the precedent user interface is recorded, so that when a user closes a user interface, the user may trigger a first information region and a second information region to be displayed, and then, the precedent user interface is quickly opened through the first information region and the second information region, thereby improving human-computer interaction efficiency in an interface display process.

Display positions and display methods of the first information region and the second information region are exemplarily described below.

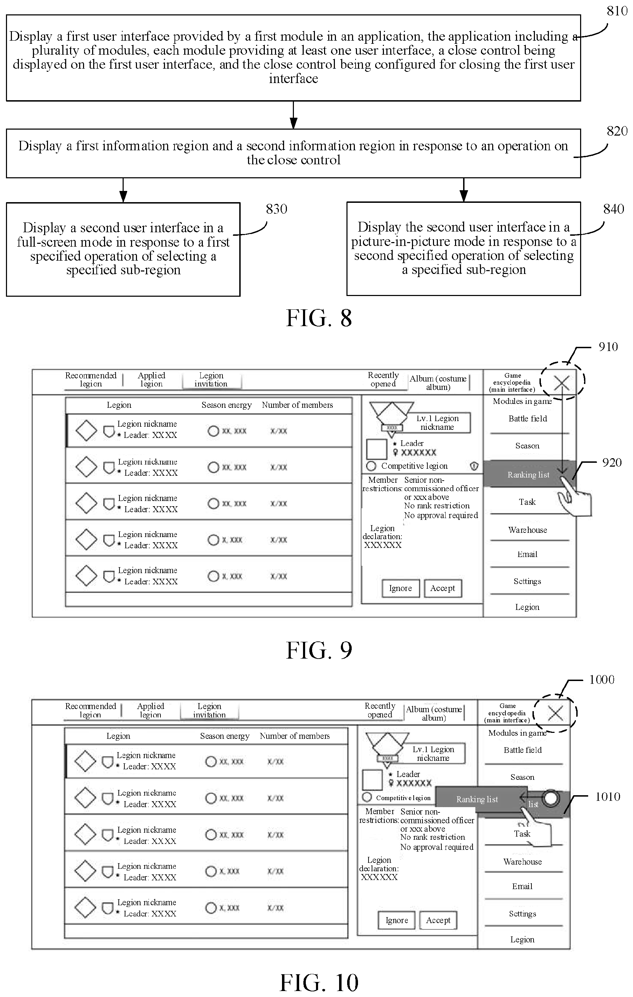

Based on the solution shown in one or more of the embodiments of this disclosure, FIG. 8 is a flowchart of an interface displaying method provided by another embodiment of this disclosure. An executing entity of operations of the method may be the terminal device 10 in the implementation environment shown in FIG. 1. For example, the executing entity of the operations may be the client of the target application. In the following method embodiments, for ease of description, an example in which the executing entity of the operations is the "client" is used for description only. The method may include at least one of the following operations (810 to 840):
Operation 810: Display a first user interface provided by a first module in an application, the application including a plurality of modules, each module providing at least one user interface, a close control being displayed on the first user interface, and the close control being configured for closing the first user interface.

In some embodiments, as shown in FIG. 7, the close control 720 is configured for closing the first user interface.

Operation 820: Display a first information region and a second information region in response to an operation on the close control.

In some embodiments, as shown in FIG. 7, the first information region 700 and the second information region 710 are displayed in response to the operation on the close control 720.

Based on the solution shown in any one or more of the embodiments of this disclosure, in some embodiments, the first information region is displayed on a first side of the close control, and the second information region is displayed on a second side of the close control.

In some embodiments, the first side and the second side are the same side or different sides. In some embodiments, as shown in FIG. 7, the first information region 700 is displayed on a left side of the close control 720, and the second information region 710 is displayed on a lower side of the close control 720.

In this embodiment of this disclosure, the first information region is displayed on the first side and the second information region is displayed on the second side, so that the first information region and the second information region are divided by using the close control as a boundary, to clarify division of work of different regions. Correspondingly, when a user performs a selection operation, the terminal device may accurately distinguish whether a sub-region selected by the user belongs to the first information region or the second information region. This is conductive to reducing false touch of the user.

Operation 830: Display a second user interface in a full-screen mode in response to a first specified operation of selecting a specified sub-region.

In some embodiments, a precedent user interface represented by a first sub-region is displayed in the full-screen mode in response to a first operation of selecting the first sub-region. A precedent user interface or a home page of a module represented by a second sub-region is displayed in the full-screen mode in response to a third operation of selecting the second sub-region.

Based on the solution shown in any one or more of the embodiments of this disclosure, in some embodiments, the first operation is a first slide operation starting from the close control and ending at the first sub-region; and the third operation is a third slide operation starting from the close control and ending at the second sub-region.

In some embodiments, the operation of closing the first user interface and the first specified operation of selecting the specified sub-region are continuous operations, or are considered as one operation performed while a finger does not leave a screen. Exemplarily, a user touches and holds the close control, to call out (display) the first information region and the second information region. After the first information region and the second information region are displayed, a finger of the user does not leave a screen and continues to move to the position of the specified sub-region. In this case, the user releases the finger, and the terminal device displays the second user interface in the full-screen mode. Specifically, after the first information region and the second information region are displayed, the finger of the user does not leave the screen and continues to move to the position of the first sub-region. In this case, the user releases the finger, and the terminal device displays, in the full-screen mode, the precedent user interface represented by the first sub-region. After the first information region and the second information region are displayed, the finger of the user does not leave the screen and continues to move to the position of the second sub-region. In this case, the user releases the finger, and the terminal device displays, in the full-screen mode, the precedent user interface or the home page of the module represented by the second sub-region.

In some embodiments, when the finger of the user moves to the specified sub-region, the second user interface is displayed in the full-screen mode if duration during which the finger is on the specified sub-region does not exceed a threshold. For example, when the finger of the user moves to the specified sub-region, the second user interface is displayed in the full-screen mode if the duration during which the finger is on the specified sub-region does not exceed 1 s.

In some other embodiments, when the finger of the user moves to the specified sub-region, the second user interface is displayed in a picture-in-picture mode if the duration during which the finger is on the specified sub-region exceeds the threshold. For example, when the finger of the user moves to the specified sub-region, the second user interface is displayed in the picture-in-picture mode if the duration during which the finger is on the specified sub-region exceeds 1 s.

In some embodiments, the first specified operation (i.e. the first slide operation or the third slide operation) and the operation of closing the first user interface are combined into one operation. To be specific, the operation of closing the first user interface is an operation on a cancel control. The user does not release the finger and continues to perform a slide operation by using the close control as a start point and the specified sub-region as an end point. The terminal device displays the second user interface in the full-screen mode. As shown in FIG. 9, a second user interface is displayed in response to a third slide operation that selects a specified sub-region, uses a close control 910 as a start point, and uses a specified sub-region 920 as an end point. The second user interface is a precedent user interface or a home page of a ranking list module.

Operation 840: Display the second user interface in a picture-in-picture mode in response to a second specified operation of selecting a specified sub-region.

In some embodiments, the precedent user interface represented by the first sub-region is displayed in the picture-in-picture mode in response to a second operation of selecting the first sub-region. The precedent user interface or the home page of the module represented by the second sub-region is displayed in the picture-in-picture mode in response to a fourth operation of selecting the second sub-region.

Picture-in-picture is first briefly described below. The picture-in-picture may be understood as being displayed on a top layer of a current user interface and having a display size less than a display size of the current user interface. When the second user interface is displayed in the picture-in-picture mode, the second user interface is displayed on a top layer of the first user interface, and a display size of the first user interface is greater than a display size of the second user interface.

Based on the solution shown in any one or more of the embodiments of this disclosure, in some embodiments, the second operation is a second slide operation starting from the close control, passing through the first sub-region, and ending at a first position, and the first position is any position on the first user interface other than the first information region or the second information region. The fourth operation is a fourth slide operation starting from the close control, passing through the second sub-region, and ending at a second position, and the second position is any position on the first user interface other than the first information region or the second information region.

In some embodiments, the first position may be any position except a first specified information region on the first user interface. The first specified information region may be an information region, in which the first sub-region is, in the first information region and the second information region.

In some embodiments, the second position may be any position except a second specified information region on the first user interface. The second specified information region may be an information region, in which the second sub-region is, in the first information region and the second information region.

In some embodiments, the operation of closing the first user interface and the second specified operation of selecting the specified sub-region are continuous operations, or are considered as one operation performed while a finger does not leave a screen. Exemplarily, a user touches and holds the close control, to call out (display) the first information region and the second information region. After the first information region and the second information region are displayed, the finger of the user does not leave the screen and continues to move to the position of the specified sub-region. Similarly, the finger does not leave the screen and then moves from the position in the specified sub-region to the first position or the second position. In this case, the user releases the finger, and the terminal device displays the second user interface in the picture-in-picture mode.

In some embodiments, when the finger of the user moves to the specified sub-region, and the terminal device identifies that an operation direction of the user is a direction from the specified sub-region towards the first position or the second position, the second user interface is displayed in the full-screen mode. For example, when the finger of the user moves to the specified sub-region, the finger moves to the left or downwards on the specified sub-region to display the second user interface in the full-screen mode.

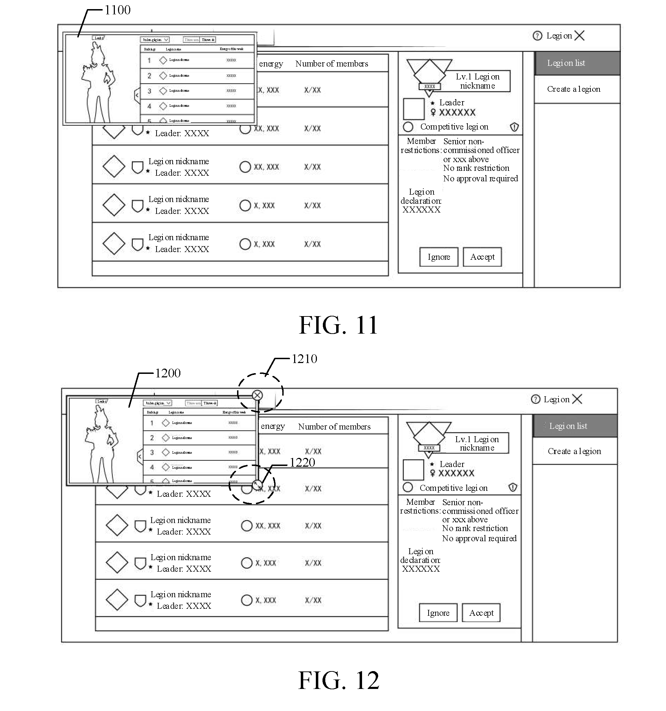

In some embodiments, the second specified operation (i.e. the second slide operation or the fourth slide operation) and the operation of closing the first user interface are combined into one operation. To be specific, the operation of closing the first user interface is an operation on a cancel control. The user does not release the finger and continues to perform a slide operation by using the close control as a start point, passing through the specified sub-region, and using the first position (or the second position) as an end point or a target. The terminal device displays the second user interface in the picture-in-picture mode. As shown in FIG. 10, in response to a second specified operation that selects a specified sub-region, uses a close control 1000 as a start point, passes through a specified sub-region 1010, and slides to a left side, as shown in FIG. 11, a second user interface 1100 is displayed in a picture-in-picture mode. The second user interface is a precedent user interface or a home page of a ranking list module. In some embodiments, when the user selects a sub-region, the sub-region may be dragged. Exemplarily, the terminal device copies "text displayed in the sub-region" for instant response. The "text displayed in the sub-region" correspondingly moves based on a moving manner of the finger of the user.

In this embodiment of this disclosure, when the second user interface is displayed in the picture-in-picture mode, a display position of the second user interface is not limited. For example, the display position of the second user interface is determined based on the first position. For example, the display position of the second user interface is determined based on an end point position of the second specified operation. For example, the end point position of the second specified operation is determined as the display position of the second user interface. In some other embodiments, when the second user interface is displayed in the picture-in-picture mode, the display position is determined based on a distribution of interface elements on the first user interface. For example, the display position is a position that does not block a main display element of the first user interface.

In this embodiment of this disclosure, the operation of selecting the first region is divided into the first specified operation and the second specified operation. In response to the first specified operation of selecting the specified sub-region, the second user interface is displayed in the full-screen mode. In response to the second specified operation of selecting the specified sub-region, the second user interface is displayed in the picture-in-picture mode. To be specific, in this disclosure, picture switching (displayed in the full-screen mode) and image comparison (displayed in the picture-in-picture mode) are implemented through different operation types. A user may implement different display manners of user interfaces based on different operation manners on the close control. This provides controllable triggering of the different display manners of the user interfaces, and it is conductive to improving operation efficiency and enriching human-computer interaction forms.

Further, the first specified operation is the slide operation that uses the close control as the start point and uses the specified sub-region as the end point. The second specified operation is the slide operation that uses the close control as the start point, passes through the specified sub-region, and uses the first position/the second position as the end point. To be specific, the picture switching and the picture comparison are implemented through the one-step operation (the first specified operation or the second specified operation) while the finger does not leave the screen, thus ensuring continuity of the operations of triggering the user interfaces to be displayed. In one aspect, the terminal device only needs to detect the continuous slide operations, so that it is conductive to reducing processing overheads of a device. In another aspect, a user only needs to perform the continuous operations to trigger the user interfaces to be displayed. This reduces an operation burden on the user.

In some embodiments, when a plurality of sub-regions exist in the first information region or the second information region, for example, when the sub-regions cannot be completely displayed on an interface, a further description is made with reference to FIG. 15. As shown in 1500 of FIG. 15, when an operation of a user passes through region A in a first information region, it is considered that the user intends to search for a precedent user interface that is opened before. To be specific, sub-regions in the first information region 1510 entirely move to the right. When there is no precedent user interface that is opened before, the sub-regions do not move. When an operation of a user passes through region B in the first information region 1510, a selected sub-region (or referred to as a popular region selected by the user) is determined based on a pointing direction of the operation. When an operation of a user passes through region C in the first information region, it is considered that the user intends to search for a precedent user interface that is opened later. To be specific, the sub-regions in the first information region 1510 entirely move to the left. When there is no precedent user interface that is opened later, the sub-regions do not move. As shown in 1500 of FIG. 15, when an operation of a user passes through region D in a second information region 1520, it is considered that the user intends to search for a previous module. To be specific, sub-regions in the second information region 1520 entirely move downwards. When there is no previous module, the sub-regions do not move. When an operation of a user passes through region E in the second information region 1520, a selected sub-region is determined based on a pointing direction of the operation. When an operation of a user passes through region F in the second information region 1520, it is considered that the user intends to search for a subsequent module. To be specific, the sub-regions in the second information region 1520 entirely move upwards. When no subsequent module exists, the sub-regions do not move. Region A and region C may be not included in the first information region 1510, or may be included in the first information region 1510. Region D and region F may be not included in the second information region 1520, or may be included in the second information region 1520.

Based on the solution shown in any one or more of the embodiments of this disclosure, in some embodiments, in response to an operation of adjusting the second user interface, at least one of a size adjustment control and a cancel control is displayed. The size adjustment control is configured for adjusting a display size of the second user interface, and the cancel control is configured for canceling displaying of the second user interface. Or, at least one of a size adjustment control and a cancel control is displayed in response to a trigger operation on a picture-in-picture interface, the picture-in-picture interface being the precedent user interface that is displayed in the picture-in-picture mode and is represented by the first sub-region, or the picture-in-picture interface being the precedent user interface or the home page of the module that is displayed in the picture-in-picture mode and is represented by the second sub-region.

In some embodiments, when the second user interface is a user interface displayed in a picture-in-picture mode, the operation (i.e. the specified trigger operation) of adjusting the second user interface (i.e. the picture-in-picture interface) may be an operation on the second user interface. An operation type of the operation is not limited in this disclosure. For example, the operation is a click/tap operation, a touch and hold operation, a double click/tap operation, or the like. For example, an adjustment control is displayed on the second user interface. In response to a touch operation on the adjustment control, at least one of the size adjustment control and the cancel control is displayed. Exemplarily, in response to an operation of clicking/tapping the second user interface, at least one of the size adjustment control and the cancel control is displayed. As shown in FIG. 12, in response to an operation of clicking/tapping a second user interface 1200, at least one of a size adjustment control 1220 and a cancel control 1210 is displayed. In this embodiment of this disclosure, after the second user interface is displayed in the picture-in-picture mode, the size adjustment control and the cancel control may be further displayed through the operation of adjusting the second user interface, to adjust a size and close the second user interface. Therefore, in the solution shown in this embodiment of this disclosure, user interfaces displayed in the picture-in-picture mode are adjusted in different manners through different adjustment controls, thereby improving display flexibility of the second user interface and enriching human-computer interaction forms.

Based on the solution shown in any one or more of the embodiments of this disclosure, in some embodiments, when the size adjustment control is used to adjust the display size of the second user interface, in response to the display size of the second user interface being greater than a first threshold, the second user interface is displayed in the full-screen mode, and the first user interface is displayed in the picture-in-picture mode. When the size adjustment control is used to adjust the display size of the second user interface, in response to the display size of the second user interface being less than a second threshold, the displaying of the second user interface is canceled. The first threshold is greater than the second threshold. To be specific, when the display size of the picture-in-picture interface is adjusted through the size adjustment control, if the display size of the picture-in-picture interface is greater than the first threshold, the picture-in-picture interface is displayed in the full-screen mode, and the first user interface is displayed in the picture-in-picture mode. If the display size of the picture-in-picture interface is less than the second threshold, the displaying of the picture-in-picture interface is canceled. In this embodiment of this disclosure, when detecting that a user intends to view the second user interface in an enlarged manner, the terminal device may display the second user interface in the enlarged manner and display the first user interface in a shrunk manner, to meet a view requirement of the user. In this way, the user does not need to open the first user interface and the second user interface repeatedly in a full-screen mode, thereby reducing operations when the user views different user interfaces in a full-screen mode. In addition, when detecting that the user intends to shrink the second user interface, the terminal device may directly cancel the displaying of the second user interface, thus canceling a user interface that the user does not currently follow, to avoid blocking of the user interface on a user interface that is displayed in a full-screen mode. The user does not need to additionally perform an operation of closing the user interface, so that precise hitting on a user requirement is implemented; operations of closing the user interface by the user are reduced; and human-computer interaction efficiency is further improved.

In some embodiments, when the size adjustment control is used to adjust the display size of the second user interface, at least one of a display length, a display width, or a display area of the first user interface may be adjusted. Exemplarily, the first threshold is at least one of a first length threshold, a first width threshold, or a first area threshold. Exemplarily, the second threshold is at least one of a second length threshold, a second width threshold, or a second area threshold. Exemplarily, the first length threshold is greater than the second length threshold; the first width threshold is greater than the second width threshold; and the first area threshold is greater than the second area threshold.

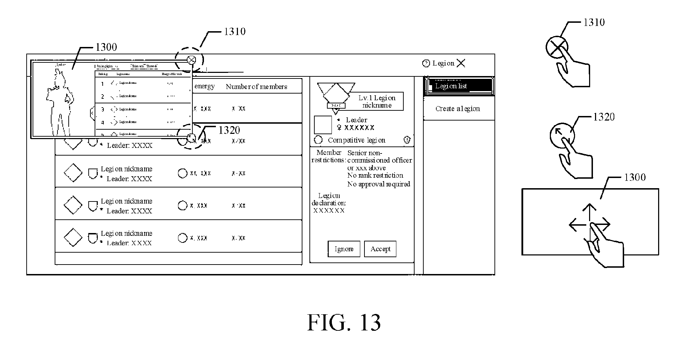

In some embodiments, when the terminal device displays the second user interface in the picture-in-picture mode, in response to a drag operation on the second user interface (i.e. the above picture-in-picture interface), the second user interface is displayed at an end point position of the drag operation. In some embodiments, in response to an operation of exiting the second user interface, the displaying of the second user interface is canceled. In some embodiments, as shown in FIG. 13, in response to an operation of clicking/tapping a second user interface 1300, at least one of a size adjustment control 1320 and a cancel control 1310 is displayed. A user may click/tap the size adjustment control 1320 to adjust a size of the second user interface. The user may click/tap the cancel control 1310 to cancel the displaying of the second user interface. Meanwhile, after the size adjustment control 1320 and the cancel control 1310 are displayed, the second user interface is redisplayed at an end point position of a drag operation in direct response to the drag operation on the second user interface 1300. In some embodiments, another position on the first user interface is clicked/tapped to exit an editing mode of the second user interface (the size adjustment control and the cancel control are displayed in the editing mode), and another position on the first user interface is clicked/tapped again to cancel the displaying of the second user interface.

The sub-regions in the first information region and the second information region are exemplarily described below.

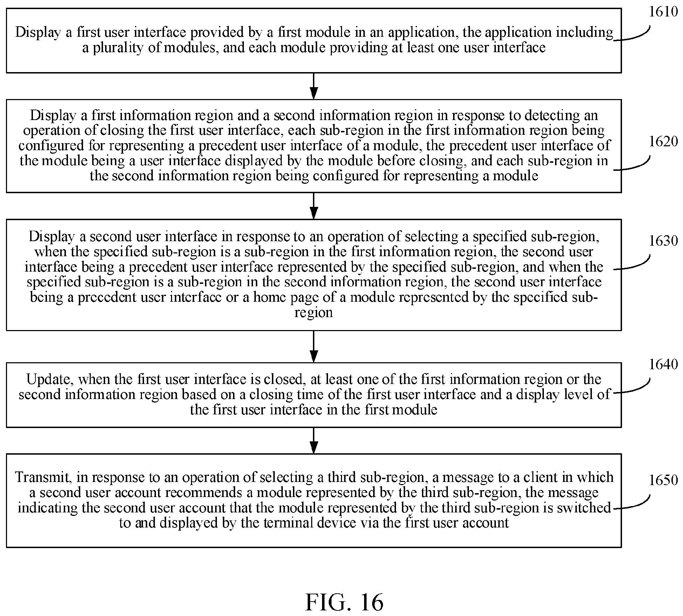

Based on the solution shown in one or more of the embodiments of this disclosure, FIG. 16 is a flowchart of an interface displaying method provided by another embodiment of this disclosure. An executing entity of operations of the method may be the terminal device 10 in the implementation environment shown in FIG. 1. For example, the executing entity of the operations may be the client of the target application. In the following method embodiments, for ease of description, an example in which the executing entity of the operations is the "client" is used for description only. The method may include at least one of the following operations (1610 to 1650):
Operation 1610: Display a first user interface provided by a first module in an application, the application including a plurality of modules, and each module providing at least one user interface.

Operation 1620: Display a first information region and a second information region in response to detecting an operation of closing the first user interface, each sub-region in the first information region being configured for representing a precedent user interface of a module, the precedent user interface of the module being a user interface displayed by the module before closing, and each sub-region in the second information region being configured for representing a module.

In some embodiments, when each sub-region in the second information region displays referral data of a module represented by the sub-region, operation 1630 below is performed.

Operation 1630: Display a second user interface in response to an operation of selecting a specified sub-region, when the specified sub-region is a sub-region in the first information region, the second user interface being a precedent user interface represented by the specified sub-region, and when the specified sub-region is a sub-region in the second information region, the second user interface being a precedent user interface or a home page of a module represented by the specified sub-region.

Operation 1640: Update, when the first user interface is closed, at least one of the first information region or the second information region based on a closing time of the first user interface and a display level of the first user interface in the first module.

In some embodiments, when the first user interface is closed, the terminal device transmits the closing time of the first user interface and the display level of the first user interface in the first module to a server of the application, so that the server updates at least one of the first information region or the second information region based on the closing time of the first user interface and the display level of the first user interface in the first module.

In some embodiments, when closing the first user interface and leaving the first module, the terminal device transmits the closing time of the first user interface and the display level of the first user interface in the first module to the server of the application.

In some embodiments, when the second user interface is displayed in a full-screen mode, it is considered that the first user interface is closed, and the terminal device transmits the closing time of the first user interface and the display level of the first user interface in the first module to the server of the application.

In some embodiments, when the second user interface is displayed in a picture-in-picture mode, the closing time (a current moment) of the first user interface and the display level of the first user interface in the first module are temporarily transmitted to the server of the application. When the second user interface is canceled, and the first user interface is redisplayed, it is considered that a flow of the first module does not end. When all flows of the first module end, a closing time of a user interface that is last displayed by the first module and a display level, in the first module, of the user interface that is last displayed by the first module are transmitted to the server of the application. In some embodiments, the closing time of the first user interface may not be transmitted to the server of the application, but the closing time of the first user interface may be directly determined based on an event in which the terminal device transmits information. In some embodiments, a name of the first module of the first user interface and the display level of the first user interface in the first module are transmitted to the server of the application. For example, A1-2-3 is reported to the server, where A represents the module name, and 1-2-3 represents the display level.

In some embodiments, the server stores user interfaces corresponding to different display levels of different modules. Exemplarily, the server may update at least one of the first information region or the second information region based on the received closing time (current moment) of the first user interface and the display level of the first user interface in the first module. Exemplarily, the server transmits each update result to the terminal device for displaying.

In the technical solution provided by this embodiment of this disclosure, the first information region and the second information region are updated based on the closing time of the first user interface and the display level of the first user interface in the first module, so that the first information region and the second information region can be updated in time when the first user interface is closed. This is conductive to improving display accuracy of the first information region and the second information region, thereby ensuring interface display efficiency.

Operation 1650: Transmit, in response to an operation of selecting a third sub-region, a message to a client in which a second user account recommends a module represented by the third sub-region, the message indicating the second user account that the module represented by the third sub-region is switched to and displayed by the terminal device via the first user account.

Specific content of the first information is not limited in this disclosure. The first information may be information entered by the first user, or may be text fixed by a developer in advance. As shown in the above embodiments, when the referral data is a quantity of stars, a user may select a module with a largest quantity of stars for switching during module switching, so as to increase a frequency of interaction with the second user account. After the first user account switches to a third module x corresponding to the third sub-region in the second information region, the terminal device (e.g. a first terminal device) transmits prompt information to a second user account (or a second terminal device on which the second user account is) recommending the third module x. For example, the prompt information is "Your friend xx quickly jumps to module x you have marked". Therefore, in the solution shown in this embodiment of this disclosure, when a module recommended by a user is triggered to be viewed by a friend, a feedback can be transmitted to the user, so that the user can clearly know which modules recommended by the user are triggered by which friends, thereby enriching human-computer interaction forms and enhancing an interaction experience between users.

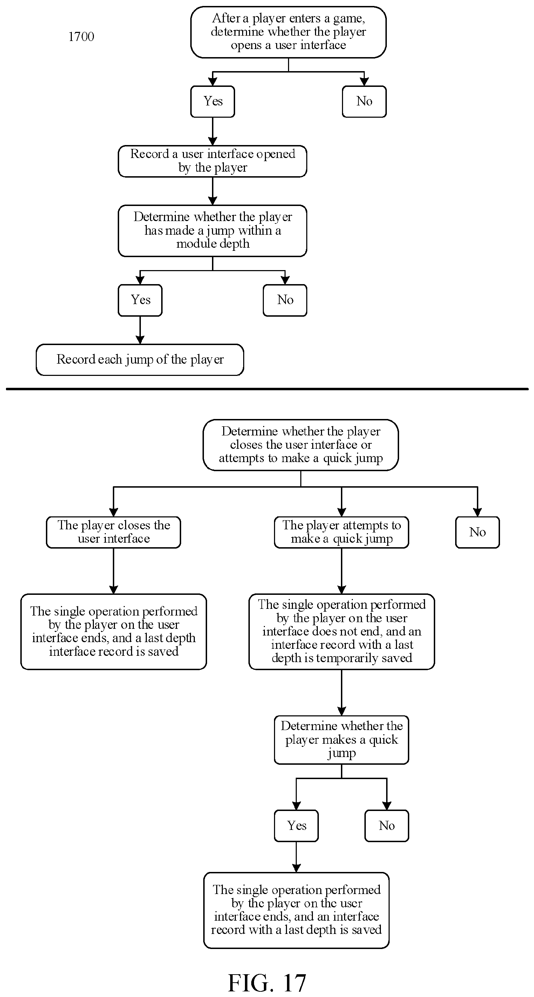

FIG. 17 is a block diagram of a precedent user interface recording method provided by an embodiment of this disclosure. An executing entity of operations of the method may be the terminal device 10 in the implementation environment shown in FIG. 1. For example, the executing entity of the operations may be the client of the target application. In the following method embodiments, for ease of description, an example in which the executing entity of the operations is the "client" is used for description only.

As shown in 1700 of FIG. 17, after a player (user) enters a game, operations of the player need to be continuously recorded in real time, to determine whether the player opens a user interface (which may alternatively be referred to as a module interface) provided by a module. If the player opens a user interface, a specific opened user interface needs to be recorded. For example, if the player opens A, A needs to be recorded. Whether the player makes a jump with a module depth (or a display level, which may be additive based on the module path of the current user interface, e.g., +1, -1, +2, -2...) in module A needs to be determined. If the player makes a jump, the jump also needs to be recorded in real time. For example, after entering module A, the player jumps to A-1 and then jumps to A-1-2, and the two jumps need to be recorded. Whether the player closes the user interface or touches and holds a close key (a close control) to attempt to make a quick jump needs to be determined in real time. If the player closes the user interface, a flow performed by the player on module A has ended this time, and only an interface before the player closes the interface and an interface depth (a display level) are reported. For example, A-1-2 is reported. If the player touches and holds a parent presses the close key to attempt to make a quick jump, the flow performed by the player on module A does not end, and a current interface of the player and an interface depth need to be reported temporarily. For example, A-1-2 is reported. Meanwhile, whether the player makes a quick jump needs to be determined. If the player makes a quick jump, the flow performed by the player on module A has ended, and A-1-2 is reported. Since then, the flow performed by the player on module A has ended this time. The player repeats this operation when opening a user interface next time, and recording is continued.

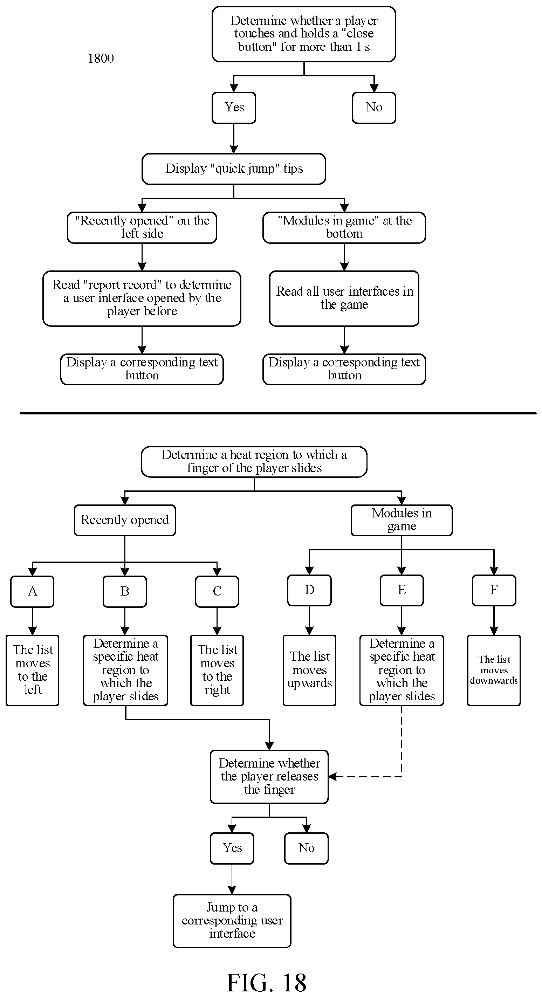

FIG. 18 is a block diagram of an interface displaying method provided by an embodiment of this disclosure. An executing entity of operations of the method may be the terminal device 10 in the implementation environment shown in FIG. 1. For example, the executing entity of the operations may be the client of the target application. In the following method embodiments, for ease of description, an example in which the executing entity of the operations is the "client" is used for description only.

As shown in 1800 of FIG. 18, when a user interface is displayed, whether a player touches and holds a "close button" for more than 1 s needs to be determined. If the player touches and holds the "close button" for more than 1 s, TIPS "quick jump" is displayed. "Recently opened" (first information region) is displayed on a left side of TIPS. A report record needs to be read to determine user interfaces that are recently opened by the player, and the user interfaces are displayed in sequence from left to right and from new to old. Text above is a module name, and text below is a module depth name (the name of the precedent user interface of the module). At the bottom of TIPS, "module in game" (a second information region) is displayed, and is displayed in sequence from top to bottom based on a sequence in a planning list. Whether a finger of the player moves to a corresponding heat region is determined. If the finger moves to region A in "recently opened", the entire list moves to the right (or to the left). If the finger moves to B, a module specifically selected by the player needs to be determined. If the finger moves to C, the entire list moves to the left (or to the right). If the finger moves to D in "module in game", the overall list moves upwards (or downwards). If the finger moves to E, a module specifically selected by the player needs to be determined. If the finger moves to F, the entire list moves downwards (or upwards). If the player selects a module, whether the player releases the finger needs to be determined. If the player releases the finger, a corresponding user interface is jumped to, and the flow ends.

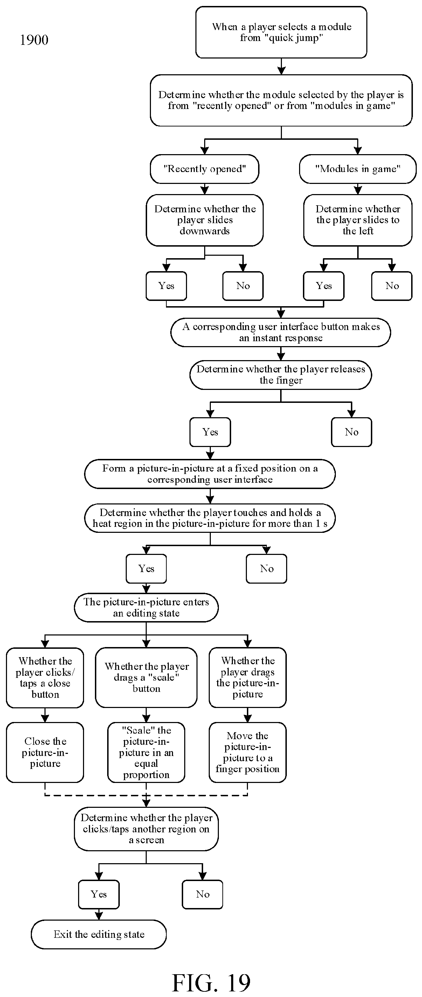

FIG. 19 is a block diagram of an interface displaying method provided by an embodiment of this disclosure. An executing entity of operations of the method may be the terminal device 10 in the implementation environment shown in FIG. 1. For example, the executing entity of the operations may be the client of the target application. In the following method embodiments, for ease of description, an example in which the executing entity of the operations is the "client" is used for description only.

As shown in 1900 of FIG. 19, when a player selects a module from "quick jump", whether the module selected by the player is from "recently opened" or from "module in game" needs to be determined. If the module is from "recently opened", whether the player slides downwards needs to be determined. If the module is from "module in game", whether the player slides to the left needs to be determined. If the player slides downwards/to the left, a corresponding user interface button makes an instant response. In this case, whether the player releases the finger needs to be determined. If the player releases the finger, a picture-in-picture (as shown in FIG. 10 and FIG. 11) corresponding to a user interface may be generated at a fixed position on a current interface. Whether the player touches and holds a heat region of the picture-in-picture for 1 s is determined. If the player touches and holds a heat region of the picture-in-picture for 1 s, the picture-in-picture enters an editing state. In the editing state, the player clicks/taps a "close" button (a cancel control) at the upper right corner to close the picture-in-picture. If a "scale" button (a size adjustment control) at the lower right corner is dragged, the picture-in-picture may be stretched in an equal proportion. If the entire picture-in-picture is dragged, the picture-in-picture may be moved to a corresponding position Whether the player clicks/taps another region on a screen needs to be determined. If the player clicks/taps another region on the screen, the editing state of the picture-in-picture is exited (as shown in FIG. 13).

The following is an apparatus embodiment of this disclosure, which can be configured to performing the method embodiment of this disclosure. For details not disclosed in the apparatus embodiments of this disclosure, refer to the method embodiments of this disclosure.

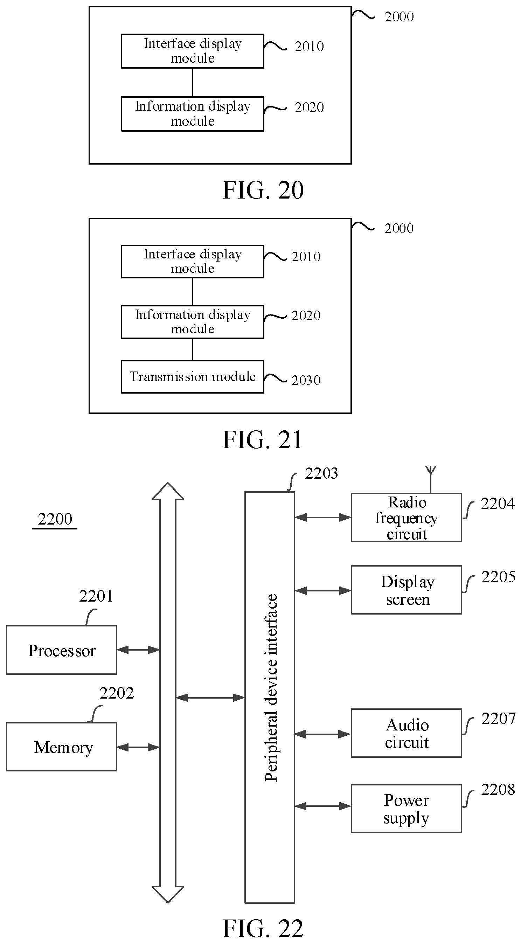

FIG. 20 is a block diagram of an interface displaying apparatus provided by an embodiment of this disclosure. The apparatus has a function of implementing the above method example. The function may be implemented by hardware or may be implemented by hardware performing corresponding software. The apparatus may be the terminal device described above, or may be arranged in the terminal device. As shown in FIG. 20, the apparatus 2000 includes: an interface display module 2010 and an information display module 2020.

The interface display module 2010 is configured to display a first user interface provided by a first module in an application, the application including a plurality of modules, and each module providing at least one user interface.

The information display module 2020 is configured to display, in response to detecting an operation of closing the first user interface, a first information region and a second information region in the first user interface, the first information region comprising a plurality of first sub-regions each representing a precedent user interface displayed by a module in the plurality of modules other than the first module before the operation of closing, and the second information region comprising a plurality of second sub-regions respectively representing the plurality of modules.

The interface display module 2010 is further configured to display, in response to selecting a first sub-region in the first information region, a precedent user interface represented by the first sub-region; and display, in response to selecting a second sub-region in the second information region, a precedent user interface or a home page of a module represented by the second sub-region.

In some embodiments, a close control is displayed on the first user interface; and the close control is configured for closing the first user interface.

In some embodiments, the information display module 2020 is configured to display the first information region and the second information region in response to an operation on the close control.

In some embodiments, the information display module 2020 is configured to display the first information region on a first side of the close control, and displaying the second information region on a second side of the close control.

In some embodiments, the interface display module 2010 is further configured to: display, in a full-screen mode in response to a first operation of selecting the first sub-region, the precedent user interface represented by the first sub-region; or, display, in a picture-in-picture mode in response to a second operation of selecting the first sub-region, the precedent user interface represented by the first sub-region.

In some embodiments, the interface display module 2010 is further configured to: display, in the full-screen mode in response to a third operation of selecting the second sub-region, the precedent user interface or the home page of the module represented by the second sub-region; or, display, in the picture-in-picture mode in response to a fourth operation of selecting the second sub-region, the precedent user interface or the home page of the module represented by the second sub-region.

In some embodiments, the interface display module 2010 is further configured to:

In some embodiments, a close control is displayed on the first user interface; the close control is configured for closing the first user interface; the first operation is a first slide operation starting from the close control and ending at the first sub-region; the second operation is a second slide operation starting from the close control, passing through the first sub-region, and ending at a first position, the first position is any position on the first user interface other than the first information region or the second information region; the third operation is a third slide operation starting from the close control and ending at the second sub-region; the fourth operation is a fourth slide operation starting from the close control, passing through the second sub-region, and ending at a second position, the second position is any position on the first user interface other than the first information region or the second information region.

In some embodiments, after displaying the second user interface in the picture-in-picture mode, the interface display module 2010 is further configured to display at least one of a size adjustment control and a cancel control in response to a trigger operation on a picture-in-picture interface, the picture-in-picture interface being the precedent user interface that is displayed in the picture-in-picture mode and is represented by the first sub-region, or the picture-in-picture interface being the precedent user interface or the home page of the module that is displayed in the picture-in-picture mode and is represented by the second sub-region,
the size adjustment control being configured for adjusting a display size of the picture-in-picture interface, and the cancel control being configured for canceling displaying of the picture-in-picture interface.

In some embodiments, when the display size of the second user interface is adjusted through the size adjustment control, the interface display module 2010 is further configured to: display, in response to the display size of the picture-in-picture interface being greater than a first threshold, the picture-in-picture interface in the full-screen mode and displaying the first user interface in the picture-in-picture mode; and cancel, in response to the display size of the picture-in-picture interface being less than a second threshold, the displaying of the picture-in-picture interface, the first threshold being greater than the second threshold.

In some embodiments, when the first information region includes the plurality of sub-regions, an arrangement order of the plurality of sub-regions in the first information region is related to a closing order of the precedent user interfaces respectively represented by the plurality of sub-regions in the first information region.

In some embodiments, each sub-region in the first information region displays at least one of the following: a name of the module represented by the respective sub-region; a name of the precedent user interface of the module represented by the respective sub-region; and a thumbnail of the precedent user interface of the module represented by the respective sub-region.

In some embodiments, each sub-region in the second information region displays at least one of the following: a name of the module represented by the respective sub-region; and referral data of the module represented by the respective sub-region, the referral data indicating that at least one second user account having a social relationship with a first user account recommends the module, and the first user account being a user account that is currently logged in on the application.

In some embodiments, as shown in FIG. 21, the apparatus further includes a transmission module 2030.

When each sub-region in the second information region displays the referral data of the module represented by the respective sub-region, the transmission module 2030 is configured to transmit, in response to an operation of selecting a third sub-region in the second information region, a message to a client in which a second user account recommends a module represented by the third sub-region, the message indicating the second user account that the module represented by the third sub-region is switched to and displayed by the terminal device via the first user account.

In some embodiments, an arrangement order of the plurality of sub-regions in the second information region is related to attribute information of modules respectively represented by the plurality of sub-regions in the second information region, and the attribute information comprises at least one of the following: a frequency of previously opening a module, popularity information of a module, and weight information of a module.

In some embodiments, the transmission module 2030 is further configured to update, when the first user interface is closed, at least one of the first information region or the second information region based on a closing time of the first user interface and a display level of the first user interface in the first module.

When the apparatus provided in the foregoing embodiments implements functions of the apparatus, the division of the foregoing functional modules is merely an example for description. In the practical application, the functions may be assigned to and completed by different functional modules according to the requirements. To be specific, the internal structure of the device is divided into different functional modules, to implement all or some of the functions described above. In addition, the apparatus provided in the foregoing embodiments and the method embodiments belong to the same concept. For details of a specific implementation process, refer to the method embodiments. Details are not described herein again.

FIG. 22 is a structural block diagram of a terminal device 2200 provided by an embodiment of this disclosure. The terminal device 2200 may be the terminal device 10 in the implementation environment shown in FIG. 1, and is configured to perform the interface displaying method provided by the above embodiment. Specifically:
generally, the electronic device 2200 includes: a processor 2201 and a memory 2202.

The processor 2201 may include one or more processing cores, for example, a 4-core processor or an 8-core processor. The processor 2201 may be implemented in at least one hardware form, including digital signal processing (DSP), a field programmable gate array (FPGA), and a programmable logic array (PLA). The processor 2201 may alternatively include a main processor and a coprocessor. The main processor is a processor configured to process data in an awake state, and is also referred to as a central processing unit (CPU). The coprocessor is a low power consumption processor configured to process the data in a standby state. In some embodiments, the processors 2201 may be integrated with a graphics processing unit (GPU). The GPU is configured to render and draw content that needs to be displayed on a display screen. In some embodiments, the processors 2201 may further include an artificial intelligence (AI) processor. The AI processor is configured to process computing operations related to machine learning.

The memory 2202 may include one or more computer-readable storage media. The computer-readable storage medium may be non-transitory. The memory 2202 may further include a high-speed random access memory and a nonvolatile memory, for example, one or more disk storage devices or flash storage devices. In some embodiments, the non-transitory computer-readable storage medium in the memory 2202 is configured to store a computer program, the computer program being configured to be executed by one or more processors to implement the above interface displaying method.

In some embodiments, the terminal device 2200 may alternatively include: a peripheral device interface 2203 and at least one peripheral device. The processor 2201, the memory 2202, and the peripheral device interface 2203 may be connected through a bus or a signal wire. Each peripheral device may be connected to the peripheral device interface 2203 through a bus, a signal cable, or a circuit board. Specifically, the peripheral device includes at least one of a radio frequency circuit 2204, a display screen 2205, an audio circuit 2207, and a power supply 2208.

A person skilled in the art may understand that the structure shown in FIG. 22 constitutes no limitation on the terminal device 2200, and the terminal device may include more or fewer components than those shown in the figure, or a combination of some components, or have a different arrangement of components.

In an exemplary embodiment, a computer-readable storage medium is further provided, having a computer program stored therein, the computer program being executed by a processor to implement the above interface displaying method.

In some embodiments, the computer-readable storage medium may include: a read-only memory (ROM), a random-access memory (RAM), a solid state drive (SSD), an optical disc, and the like. The random access memory may include a resistive random access memory (ReRAM) and a dynamic random access memory (DRAM).

In an exemplary embodiment, a computer program product is further provided, the computer program product including a computer program, the computer program being stored in a computer-readable storage medium. A processor of a terminal device reads the computer program from the computer-readable storage medium, and executes the computer program, to cause the terminal device to perform the above interface displaying method.

In this disclosure, before and during acquisition of precedent user interfaces, a prompt interface, a pop-up window, or voice prompt information may be displayed. The prompt interface, the pop-up window, or the voice prompt information is configured for prompting data currently being acquired by a user, so that in this disclosure, only after a confirmation operation performed by the user on the prompt interface or the pop-up window is obtained, a related operation of obtaining user-related data is started, and otherwise (for example, when the confirmation operation performed by the user on the prompt interface or the pop-up window is not obtained), the user-related data is not obtained. In other words, all user data acquired in this disclosure is acquired with the consent and authorization of a user, and acquisition, use, and processing of the relevant user data need to comply with the relevant laws, regulations, and standards of relevant countries and regions.

"Plurality of" mentioned herein means two or more. The term "and/or" describes an association relationship of associated objects, representing that three relationships may exist. For example, A and/or B may represent three situations: A exists alone; A and B exist simultaneously; and B exists alone. The character "/" usually indicates an "or" relationship between associated objects. In addition, the serial numbers of the operations described in this specification merely schematically show a possible execution sequence of the operations. In some other embodiments, the operations may not be performed according to the serial numbers. For example, two operations with different serial numbers may be performed simultaneously, or two operations with different serial numbers may be performed according to a sequence contrary to the sequence shown in the figure. This is not limited in the embodiments of this disclosure.

## Claims

1. An interface displaying method, executable by a terminal device, the method comprising:
displaying a first user interface provided by a first module in an application, the application comprising a plurality of modules, and each module providing at least one user interface;
displaying, in response to detecting an operation of closing the first user interface, a first information region and a second information region in the first user interface, the first information region comprising a plurality of first sub-regions each representing a precedent user interface displayed by a module in the plurality of modules other than the first module before the operation of closing, and the second information region comprising a plurality of second sub-regions respectively representing the plurality of modules;
displaying, in response to selecting a first sub-region in the first information region, a precedent user interface represented by the first sub-region; and
displaying, in response to selecting a second sub-region in the second information region, a precedent user interface or a home page of a module represented by the second sub-region.

2. The method according to claim 1, wherein a close control is displayed on the first user interface; the close control is configured for closing the first user interface; and
the displaying, in response to detecting an operation of closing the first user interface, a first information region and a second information region in the first user interface comprises:
displaying the first information region and the second information region in response to an operation on the close control.

3. The method according to claim 2, wherein the displaying the first information region and the second information region in response to an operation on the close control comprises:
displaying the first information region on a first side of the close control, and displaying the second information region on a second side of the close control.

4. The method according to any one of claims 1 to 3, wherein the displaying, in response to selecting a first sub-region in the first information region, a precedent user interface represented by the first sub-region comprises:
displaying, in a full-screen mode in response to a first operation of selecting the first sub-region, the precedent user interface represented by the first sub-region; or,
displaying, in a picture-in-picture mode in response to a second operation of selecting the first sub-region, the precedent user interface represented by the first sub-region; and
the displaying, in response to an operation of a second sub-region in the second information region, a precedent user interface or a home page of the module represented by the second sub-region comprises:
displaying, in the full-screen mode in response to a third operation of selecting the second sub-region, the precedent user interface or the home page of the module represented by the second sub-region; or,
displaying, in the picture-in-picture mode in response to a fourth operation of selecting the second sub-region, the precedent user interface or the home page of the module represented by the second sub-region.

5. The method according to claim 4, wherein a close control is displayed on the first user interface; the close control is configured for closing the first user interface;
the first operation is a first slide operation starting from the close control and ending at the first sub-region;
the second operation is a second slide operation starting from the close control, passing through the first sub-region, and ending at a first position, the first position is any position on the first user interface other than the first information region or the second information region;
the third operation is a third slide operation starting from the close control and ending at the second sub-region;
the fourth operation is a fourth slide operation starting from the close control, passing through the second sub-region, and ending at a second position, the second position is any position on the first user interface other than the first information region or the second information region.

6. The method according to claim 4 or 5, further comprising:
displaying at least one of a size adjustment control and a cancel control in response to a trigger operation on a picture-in-picture interface, the picture-in-picture interface being the precedent user interface that is displayed in the picture-in-picture mode and is represented by the first sub-region, or the picture-in-picture interface being the precedent user interface or the home page of the module that is displayed in the picture-in-picture mode and is represented by the second sub-region,
the size adjustment control being configured for adjusting a display size of the picture-in-picture interface, and the cancel control being configured for canceling displaying of the picture-in-picture interface.

7. The method according to claim 6, further comprising:
when the display size of the picture-in-picture interface is adjusted through the size adjustment control,
displaying, in response to the display size of the picture-in-picture interface being greater than a first threshold, the picture-in-picture interface in the full-screen mode and displaying the first user interface in the picture-in-picture mode; and
canceling, in response to the display size of the picture-in-picture interface being less than a second threshold, the displaying of the picture-in-picture interface, the first threshold being greater than the second threshold.

8. The method according to any one of claims 1 to 7, wherein an arrangement order of the plurality of sub-regions in the first information region is related to a closing order of the precedent user interfaces respectively represented by the plurality of sub-regions in the first information region.

9. The method according to any one of claims 1 to 8, wherein each sub-region in the first information region displays at least one of the following:
a name of the module represented by the respective sub-region;
a name of the precedent user interface of the module represented by the respective sub-region; and
a thumbnail of the precedent user interface of the module represented by the respective sub-region.

10. The method according to any one of claims 1 to 9, wherein each sub-region in the second information region displays at least one of the following:
a name of the module represented by the respective sub-region; and
referral data of the module represented by the respective sub-region, the referral data indicating that at least one second user account having a social relationship with a first user account recommends the module, and the first user account being a user account that is currently logged in on the application.

11. The method according to claim 10, wherein when each sub-region in the second information region displays the referral data of the module represented by the respective sub-region, the method further comprises:
transmitting, in response to an operation of selecting a third sub-region in the second information region, a message to a client in which a second user account recommends a module represented by the third sub-region, the message indicating the second user account that the module represented by the third sub-region is switched to and displayed by the terminal device via the first user account.

12. The method according to any one of claims 1 to 11, wherein an arrangement order of the plurality of sub-regions in the second information region is related to attribute information of modules respectively represented by the plurality of sub-regions in the second information region, and the attribute information comprises at least one of the following: a frequency of previously opening a module, popularity information of a module, and weight information of a module.

13. The method according to any one of claims 1 to 12, further comprising:
updating, when the first user interface is closed, at least one of the first information region or the second information region based on a closing time of the first user interface and a display level of the first user interface in the first module.

14. An interface displaying apparatus, comprising:
an interface display module, configured to display a first user interface provided by a first module in an application, the application comprising a plurality of modules, and each module providing at least one user interface; and
an information display module, configured to display, in response to detecting an operation of closing the first user interface, a first information region and a second information region in the first user interface, the first information region comprising a plurality of first sub-regions each representing a precedent user interface displayed by a module in the plurality of modules other than the first module before the operation of closing, and the second information region comprising a plurality of second sub-regions respectively representing the plurality of modules;
the interface display module being further configured to display, in response to selecting a first sub-region in the first information region, a precedent user interface represented by the first sub-region; and
the interface display module being further configured to display, in response to selecting a second sub-region in the second information region, a precedent user interface or a home page of a module represented by the second sub-region.

15. The apparatus according to claim 14, wherein a close control is displayed on the first user interface; the close control is configured for closing the first user interface; and
the information display module is configured to display the first information region and the second information region in response to an operation on the close control.

16. The apparatus according to claim 15, wherein the information display module is configured to: display the first information region on a first side of the close control and display the second information region on a second side of the close control.

17. The apparatus according to any one of claims 14 to 16, wherein
the interface display module is further configured to: display, in a full-screen mode in response to a first operation of selecting the first sub-region, the precedent user interface represented by the first sub-region; or, display, in a picture-in-picture mode in response to a second operation of selecting the first sub-region, the precedent user interface represented by the first sub-region; and
the interface display module is further configured to: display, in the full-screen mode in response to a third operation of selecting the second sub-region, the precedent user interface or the home page of the module represented by the second sub-region; or, display, in the picture-in-picture mode in response to a fourth operation of selecting the second sub-region, the precedent user interface or the home page of the module represented by the second sub-region.

18. A terminal device, comprising a processor and a memory, the memory having a computer program stored therein, and the computer program being loaded and executed by the processor to implement the interface displaying method according to any one of claims 1 to 13.

19. A computer-readable storage medium, having a computer program stored therein, the computer program being loaded and executed by a processor to implement the interface displaying method according to any one of claims 1 to 13.

20. A computer program product, comprising a computer program, the computer program being stored in a computer-readable storage medium, and a processor reading the computer program from the computer-readable storage medium and executing the computer program, to implement the interface displaying method according to any one of claims 1 to 13.
